# EUROPEAN PATENT SPECIFICATION

(11) **EP 1 964 468 B1**
(45) Date of publication and mention of the grant of the patent: **23.07.2014**
(21) Application number: 08380024.3
(22) Date of filing: 31.01.2008
(51) Int. Cl.: A01K 5/02

(54) **Animal feed storage vessel**
Tierfuttervorratsbehälter
Récipient de stockage d'aliments pour animaux

(30) Priority: 28.02.2007 ES 200700521
(43) Date of publication of application: 03.09.2008
(73) Proprietor: Rotecna, S.A., 25310 Agramunt (ES)
(72) Inventor: Romeu Guardia, Gener, 25310 Agramunt (ES)
(74) Representative: Sugrañes Patentes y Marcas

(56) References cited:
- EP-A- 1 188 371
- EP-A- 1 716 750
- WO-A-99/09812
- DE-U1- 29 600 621

## Description

### Technical field of the invention

The invention relates to a storage vessel for animal feed, intended to be part of a feeder for stalled animals.

### Background of the invention

Traditional feeders for stalled animals such as cows and pigs are comprised of feed storage hoppers conventionally formed in a single piece. These hoppers are shaped like an inverted truncated cone, open at the base, storing the feed or grain in their interior, so that said feed may gradually fall due to gravity, as the animals operate a means for its dispensing arranged below the outlet of the hopper.

Until recently, these hoppers were attached to a steel frame which was in turn fixed to the floor or to lateral uprights or fences. In order to reduce the cost of materials, feed storage vessels constituted of two like parts have been disclosed recently which, facing each other and duly fixed, form a central hopper and two lateral supports adapted to carry out the functions of the steel frame used previously. Document EP1188371-A2 discloses one of said feed storage vessels, wherein the livestock feeding assembly comprises an inverted truncated cone-shaped hopper and a manger being connected together by means of a frame, said hopper comprising means to control de dry feed quantity to be supplied, means to supply water to the manger being fitted to the frame. The means to control the quantity of dry feed comprise a vertical pipe being guided by means of a clamp being secured by bolts and nuts to vertical spans of the frame below the hopper, said vertical pipe facing the open bottom of said hopper and being held by means of an axial rod associated to an external control. The area where the hopper and the vertical pipe are facing each other is surrounded by a shielding shell which is formed by two mutually joined halves being provided with orifices serving to secure them by means of bolts, rivets or other elements extending through them to vertical spans of the frame.

In spite of the fact that this variant facilitates assembly and reduces the number of components, it features a number of drawbacks. Although its volume regarding transport and storage is reduced in comparison with traditional vessels, the sections which make up the vessel are relatively large and their external shape complicates their stacking, for example.

The object of the invention is to disclose an animal feed storage vessel which reduces even further the volume necessary for its transport or storage, and which should be easily integrable with a conventional feeder, which habitually comprises other components such as the dispensing means described above, a means for supplying the feeder with liquids, etc., in such a way that auxiliary elements for the supporting of these components should not be necessary.

### Explanation of the invention

The feed storage vessel which is the object of this invention is optimal for use in a feeder for stalled animals. The vessel is constituted of an inverted truncated cone-shaped hopper whose lower, smaller base features a generally cylindrically shaped elongation at its end, which forms the lower mouth of the vessel, through which the feed falls due to gravity; and of two lateral supporting sections, apparently identical to each other, each of which features a lower portion for the mutual coupling to the other supporting part, both lower sections being intended to encircle the end elongation of the hopper and/or to act as a support for the same, and each lateral supporting part likewise featuring an essentially flat vertical section, intended to adopt a position on the same plane as the analogous section of the other supporting part, a plane which comprises the axis of symmetry of the hopper. The vessel is characterised in that the lower mutually coupling portions feature a widened central section featuring internally a seat intended to receive and support the edge of a distribution tray.

Conveniently, the component of the greatest size, this being the hopper, is stackable, while the two lateral supporting sections, smaller in size in comparison with the sections of the known vessels which integrate a half of the body of the hopper, may be placed one over the other forming in a stable manner stacks of more than one vessel.

In accordance with another characteristic of the invention, at least one of the lateral supporting sections features a rigid pipe arranged essentially vertical, preferably embedded in the essentially flat portion of the section, and adapted so as to carry out the supply of liquids to the feeder.

In accordance with another characteristic of the invention, the aforementioned lower mutually coupling portions are concave and are adapted to receive the insertion of the lower end elongation of the hopper when they are duly coupled, with their concavities facing each other.

In accordance with an embodiment of the invention, the aforementioned elongation at the base of the hopper features an external peripheral ring which rests on the lower portions of the mutual coupling.

In accordance with another characteristic of the invention, the lateral supporting sections feature internally a horizontal cylindrical compartment, at the same height in both supporting sections, intended to act as a support for the operating shaft of the distribution tray.

### Brief description of the drawings

Portrayed in the attached drawings, as a non-limitative example, is an animal feeder which comprises a feed storage vessel in accordance with the invention. Specifically:
Figure 1 is an exploded view of the feeder wherein the different components of the vessel may be seen;
Figure 2 is a perspective view of the feeder in Figure 1, wherein the components of the vessel and other parts of the feeder are duly coupled; and
Figure 3 is a detail, in cross-section, of the zone of the mouth of the hopper, which is one of the components of the vessel in accordance with the invention, in the feeder in Figure 2.

### Detailed description of the drawings

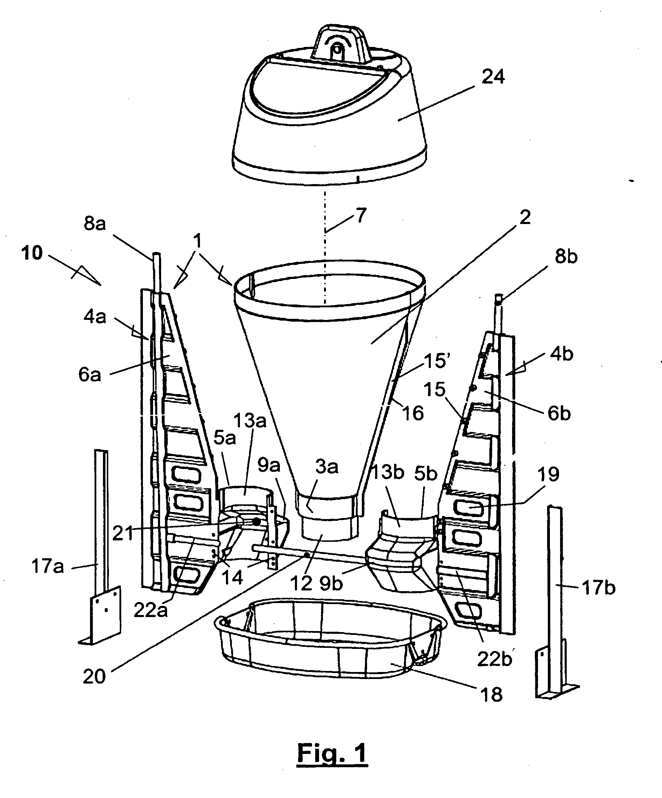

Different parts of a feeder 10 for stalled animals have been portrayed in Figure 1, in their correlative position for the fitting together of the same; among these the components of the feed storage vessel 1 which is the object of this invention are to be highlighted.

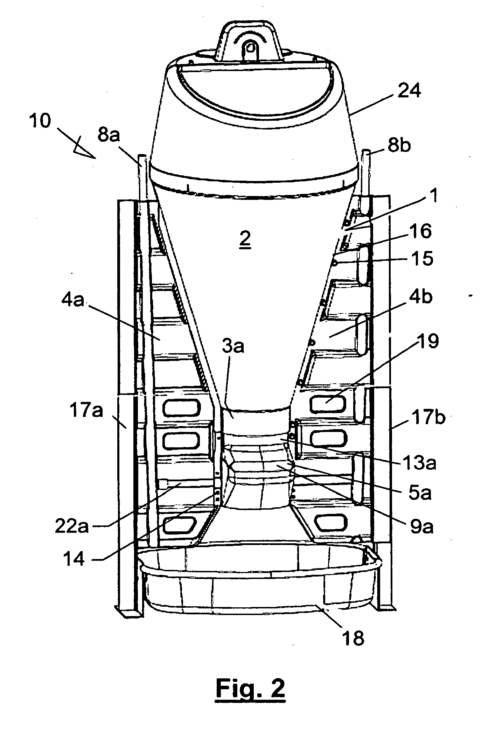

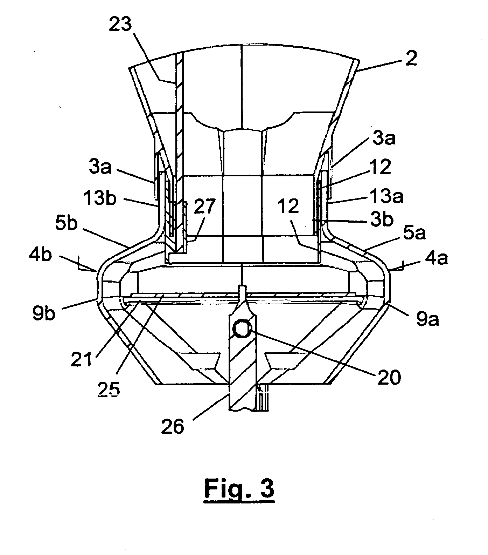

The vessel 1 is formed by a hopper 2 of an inverted truncated cone shape whose smaller base, arranged at the lower part of the hopper 2, features a generally cylindrical elongation 3b at its end (see Figure 3) and an external peripheral ring 3a, which encircles the aforementioned end elongation 3b. Between this peripheral ring 3a and the end elongation 3b of the hopper 2 is arranged a cylindrical body 12, whose lower end projects beyond the peripheral ring 3a in the drawing in Figure 1, and which is hung from an operating rod, not portrayed, capable of axial movement, in an upward or downward direction, in such a way that it permits the regulating of the distance which separates the practical mouth of the hopper 2, constituted by the mouth of the cylindrical body 12, and a distribution tray, not portrayed in Figures 1 and 2, which is habitually placed transversally below the mouth of the hopper 2. This tray may be moved laterally, with regard to a central resting position, when it is hit by an animal which wants to feed, thus allowing a portion of feed to drop; said feed had previously fallen, due to gravity, through the mouth of the hopper 2, and had collected on said tray.

The vessel 1 is further constituted by two identical lateral supporting sections 4a and 4b, one of these arranged at an angle of 180° with regard to the other around a vertical axis in the assembled position of the vessel 1; each of these features a lower portion 5a and 5b respectively, which couples mutually with the other supporting section. These lower coupling portions 5a and 5b feature corresponding complementary semi-cylindrical upper sections 13a and 13b, the joining of which forms a fixing ring, of a cross-section similar to that of the cylindrical body 12, intended to receive the insertion of the assembly formed by the aforementioned cylindrical body 12 and of the end elongation 3b of the hopper 2. This situation has been portrayed in Figure 2 and, in cross-section, in Figure 3.

For the coupling of the lower portions 5a and 5b, and therefore of the respective lateral supporting sections 4a and 4b; these last feature a series of holes 14 distributed regularly along the sides of the lower portions 5a and 5b of the coupling, which become axially aligned when the two sections are juxtaposed with their concavities facing each other (see Figure 2), and said holes permit the fixing of the lateral supporting sections 4a and 4b, for example by means of the use of bolts with their corresponding nuts tightened.

It may be seen in Figures 1 and 2 that each of the lateral supporting sections 4a and 4b also feature respective flat vertical portions 6a and 6b respectively, which adopt a position on a common plane which comprises the axis of symmetry 7 of the hopper 2 when the lateral sections 4a and 4b are duly coupled via their lower coupling portions 5a and 5b.

The edges of the flat portions 6a and 6b, which face each other, present a cut-out profile which is complementary to that of the exterior of the hopper 2, which fits between the aforementioned edges of the flat portions 6a and 6b, which face each other when the components of the vessel 1 are duly joined, all of this as portrayed in Figure 2.

In order to fix the hopper 2 and the lateral supporting sections 4a and 4b firmly together, at least one of said lateral sections 4b features, at the edge of the flat portion 6b and facing the hopper 2, a series of holes 15 which coincide with holes 15' also featured on a lateral flange 16 of the hopper 2. Holes 15 and 16 permit the fixing of these components to the vessel 1, for example by means of bolts with the corresponding nuts for their tightening.

The feeder 10 portrayed in Figures 1 and 2 is complemented by two lateral uprights 17a and 17b and with a receptacle 18 which collects the feed falling from the hopper 2. The lateral uprights 17a and 17b are adapted so as to be anchored on the ground, and are fixed against the external edges of the respective flat portions 6a and 6b of the lateral supporting sections 4a and 4b of the vessel 1, being fixed to the same for example by means of bolts, the vessel 1 and in particular the mouth of the hopper 2 being raised above floor level. The receptacle 18 is tightly fixed between the lateral uprights 17a and 17b; this may also be fixed, by the means which may be considered appropriate, to the base of the uprights 17a and 17b.

In order to supply the feeder 10 with liquids, in the example of Figures 1 and 2, the lateral supporting sections 4a and 4b include respective rigid pipes 8a and 8b respectively, embedded with an apparently vertical arrangement in the flat portions 6a and 6b of the lateral supporting sections 4a and 4b, which are adapted to carry out the supply of liquids to the feeder 10.

The flat portions 6a and 6b feature elements in high and low relief, with the aim of endowing the lateral supporting sections 4a and 4b with greater rigidity; at the same time they feature a series of holes 18 for the purpose of reducing their weight.

It may also be seen in Figures 1 and 2 that the flat portions 6a and 6b of the lateral supporting sections 4a and 4b feature at their lower extremity a cylindrical compartment 22a and 22b, this being horizontal and at the same level in both lateral supporting sections 4a and 4b, intended to receive and to act as a support for the corresponding ends of an operating shaft 20 (see Figure 1) for the distribution tray.

With the purpose of supporting said distribution tray in an optimal position, the lower coupling portions 5a and 5b of the lateral supporting sections 4a and 4b feature a central widened section 9a and 9b, featuring internally a seat 21 a (visible in Figures 1 and 3) each of these being intended to support an edge of the distribution tray 25 which rests on the same.

In Figure 3 a cross-sectional enlargement of the zone of the mouth of the hopper 2 is portrayed, this being inserted into the lower coupling portions 5a and 5b. As may be seen, in this situation the hopper 2 rests, by means of its peripheral ring 3a, on the upper edge of the semi-cylindrical portions of the upper sections 13a and 13b of both lower coupling portions 5a and 5b, which together form a retaining ring. In this situation, the retaining ring surrounds, with a certain amount of play, the assembly formed by the cylindrical body 12 and the end elongation 3b, in this case also cylindrical, in such a way that the movement in an axial direction of the cylindrical body 12 is not hindered.

For the joint between the operating rod 23 of the cylindrical body 12 and said cylindrical body, it is intended that the end elongation 3b of the hopper 2 shall feature a slot, preferably oblong and arranged longitudinally, through which corresponding joining means will connect the operating rod 23 with the cylindrical body 12. Alternatively, this joint may be carried out below the mouth of the end elongation 3b, as portrayed in the example of Figure 3, wherein the cylindrical body 12 features a fixing means 27 at its lower edge; this extends upwards, partially entering the interior of the end elongation 3b. In accordance with this embodiment, the upward movement of the cylindrical body 12 would be limited by the buffering of the fixing means 27 against the edge or the mouth of the aforementioned end elongation 3b.

The means for acting on the operating rod 23 are supported within a removable cover 24, portrayed in Figures 1 and 2, which closes the upper portion of the hopper 2 and which protects the feed contained in its interior from the external elements.

## Claims

1. A feed storage vessel (1) for an animal feeder (10), which is constituted of
- an inverted truncated cone-shaped hopper (2) whose smaller, lower base features a generally cylindrical-shaped elongation (3b) at its end, which forms the lower mouth of the vessel, through which the feed falls due to gravity, and
- of two lateral supporting sections (4a, 4b), identical, each of which features a lower portion (5a, 5b) for its mutual coupling to the other supporting section, both lower portions being intended to encircle the lower end elongation of the hopper and/or to act as a support for the aforementioned hopper, and each lateral supporting section featuring an essentially flat vertical portion (6a, 6b), intended to adopt a position on the same plane as the analogous portion of the other supporting section, a plane which comprises the axis of symmetry (7) of the hopper,
**characterised in that** the lower mutually coupling portions (5a, 5b) feature a widened central section (9a, 9b) featuring internally a seat (21) intended to receive and support the edge of a distribution tray (25).

2. A storage vessel (1) according to claim 1, **characterised in that** at least one of the lateral supporting sections (4a, 4b) features a rigid pipe (8a, 8b) arranged essentially vertical, preferably embedded in the essentially flat portion (6a, 6b) of the section, and adapted so as to carry out the supply of liquids to the feeder (10).

3. A storage vessel (1) according to any one of claims 1 and 2, **characterised in that** the aforementioned lower portions (5a, 5b), to be mutually coupled together, are concave and are adapted in order to receive the insertion of the lower end elongation (3b) of the hopper (2) when they are duly coupled together with their concavities facing each other.

4. A storage vessel (1) according to any one of claims 1 to 3, **characterised in that** the aforementioned end elongation (3b) of the hopper (2) features an external peripheral ring (3a) for resting on the mutually coupling lower portions (5a, 5b).

5. A storage vessel (1) according to any one of the preceding claims, **characterised in that** the lateral supporting sections (4a, 4b) feature at the lower part of the same a horizontal cylindrical compartment (22a, 22b), at the same height in both supporting sections, intended to act as a support for an operating shaft (20) for the distribution tray (25).

## Patentansprüche

1. Futtervorratsbehälter (1) für eine Futterstelle (10), bestehend aus
- einem umgekehrten abgestumpften kegelförmigen Trichter (2), dessen kleinere, untere Basis eine allgemein zylinderförmige Verlängerung (3b) an ihrem Ende aufweist, welche die untere Öffnung des Behälters, durch welche das Futter aufgrund der Schwerkraft fällt, bildet, und
- zwei seitlichen Stützabschnitten (4a, 4b), die identisch sind, wobei jeder einen unteren Teil (5a, 5b) für dessen jeweilige Kopplung mit dem anderen Stützabschnitt aufweist, wobei beide unteren Teile dazu vorgesehen sind, die untere Endverlängerung des Trichters zu umgeben und/oder als Abstützung für den vorgenannten Trichter zu wirken, und wobei jeder seitliche Stützabschnitt einen wesentlich flachen vertikalen Teil (6a, 6b) aufweist, welcher dazu vorgesehen ist, eine Stellung auf derselben Ebene wie der analoge Teil des anderen Stützabschnitts anzunehmen, eine Ebene, welche die Symmetrieachse (7) des Trichters umfasst,
**dadurch gekennzeichnet, dass** die unteren miteinander koppelnden Teile (5a, 5b) einen erweiterten zentralen Abschnitt (9a, 9b) aufweisen, welcher in seinem Inneren einen Sitz (21) aufweist, welcher dazu vorgesehen ist, den Rand einer Verteilungsschale (25) aufzunehmen und abzustützen.

2. Vorratsbehälter (1) nach Anspruch 1, **dadurch gekennzeichnet, dass** mindestens einer der seitlichen Stützabschnitte (4a, 4b) ein steifes Rohr (8a, 8b) aufweist, welches wesentlich vertikal angeordnet, bevorzugt in dem wesentlich flachen Teil (6a, 6b) des Abschnitts eingebaut und dazu angepasst ist, die Versorgung von Flüssigkeiten zur Futterstelle (10) durchzuführen.

3. Vorratsbehälter (1) nach einem der Ansprüche 1 und 2, **dadurch gekennzeichnet, dass** die vorgenannten unteren Teile (5a, 5b), welche miteinander gekoppelt werden sollen, konkav sind und dazu angepasst sind, die Einführung der unteren Endverlängerung (3b) des Trichters (2) aufzunehmen, wenn sie richtig miteinander gekoppelt sind, mit ihren Höhlungen gegenübergestellt.

4. Vorratsbehälter (1) nach einem der Ansprüche 1 bis 3, **dadurch gekennzeichnet, dass** die vorgenannte Endverlängerung (3b) des Trichters (2) einen äußeren peripheren Ring (3a) für die Auflage auf den miteinander koppelnden Teile (5a, 5b).

5. Vorratsbehälter (1) nach einem der vorhergehenden Ansprüche, **dadurch gekennzeichnet, dass** die seitlichen Stützabschnitte (4a, 4b) in dem unteren Teil derselben einen horizontalen zylindrischen Raum (22a, 22b) aufweisen, auf derselben Höhe in beiden Stützabschnitte, welcher dazu vorgesehen ist, als Abstützung für eine Betätigungswelle (20) für die Verteilungsschale (25) zu wirken.

## Revendications

1. Récipient de stockage d'aliments (1) pour une mangeoire pour animaux (10), qui est constitué
- d'une trémie de forme tronconique inversée (2) dont la base inférieure, plus petite, comporte un allongement de forme généralement cylindrique (3b) à son extrémité, qui forme l'embouchure inférieure du récipient, à travers laquelle l'aliment tombe par gravité, et
- de deux sections latérales de support (4a, 4b), identiques, chacune desquelles comporte une partie inférieure (5a, 5b) pour son couplage mutuel à l'autre section de support, les deux parties inférieures étant destinées à entourer l'allongement d'extrémité inférieure de la trémie et/ou à agir comme un support pour ladite trémie, et chaque section latérale de support comportant une partie verticale essentiellement plane (6a, 6b), destiné à adopter une position sur le même plan que la partie analogue de l'autre section de support, lequel plan comprend l'axe de symétrie (7) de la trémie,
caractérisé en ce les parties de couplage mutuel inférieures (5a, 5b) comportent une section centrale élargie (9a, 9b) comportant intérieurement un siège (21) destiné à recevoir et supporter le bord d'un plateau de distribution (25).

2. Récipient de stockage (1) selon la revendication 1, **caractérisé en ce qu'**au moins une des sections latérales de support (4a, 4b) comporte un tube rigide (8a, 8b) disposé essentiellement de manière vertical, de préférence noyé dans la partie essentiellement plane (6a, 6b) de la section, et adapté de manière à réaliser l'alimentation en liquides vers la mangeoire (10).

3. Récipient de stockage (1) selon l'une quelconque des revendications 1 et 2, **caractérisé en ce que** lesdites parties inférieures (5a, 5b) devant être couplées mutuellement ensemble, sont concaves et sont adaptées pour recevoir l'insertion de l'allongement d'extrémité inférieure (3b) de la trémie (2) lorsqu'elles sont dûment couplées ensemble avec leurs concavités s'opposant l'une par rapport l'autre.

4. Récipient de stockage (1) selon l'une quelconque des revendications 1 à 3, **caractérisé en ce que** ledit allongement d'extrémité (3b) de la trémie (2) comporte un anneau périphérique externe (3a) pour reposer sur les parties inférieures de couplage mutuel (5a, 5b).

5. Récipient de stockage (1) selon l'une quelconque des revendications précédentes, **caractérisé en ce que** les sections latérales de support (4a, 4b) comportent à la partie inférieure de celles-ci un compartiment cylindrique horizontal (12a, 12b), à la même hauteur dans les deux sections de support, destiné à agir comme un support pour un arbre d'entrainement (20) pour le plateau de distribution.
